# FASCICULE DE BREVET EUROPEEN

(11) **EP 3 899 209 B1**
(45) Date de publication et mention de la délivrance du brevet: **02.11.2022**
(21) Numéro de dépôt: 19848795.1
(22) Date de dépôt: 19.12.2019
(51) Int. Cl.: F01D 25/04, B29D 99/00, B29C 70/24, D03D 25/00, F01D 5/16, F01D 25/06, B29L 31/08

(54) **PIECE EN COMPOSITE A RENFORT FIBREUX AVEC UNE RESISTANCE AUX VIBRATIONS AUGMENTEE**
FASERVERSTÄRKTES VERBUNDTEIL MIT ERHÖHTER VIBRATIONSFESTIGKEIT
FIBRE-REINFORCED COMPOSITE PART WITH INCREASED VIBRATION RESISTANCE

(30) Priorité: 21.12.2018 FR 1873851
(43) Date de publication de la demande: 27.10.2021
(73) Titulaire: SAFRAN, 75015 Paris (FR)
(72) Inventeur: DAMBRINE, Bruno, Jacques, Gérard, 77550 Moissy-Cramayel (FR); TRANQUART, Bastien, 77550 Moissy-Cramayel (FR); COUPE, Dominique, Marie, Christian, 77550 Moissy-Cramayel (FR); COLOT, Marc-Antoine, 77550 Moissy-Cramayel (FR)
(74) Mandataire: Cabinet Beau de Loménie
(86) Numéro de dépôt international: PCT/FR2019/053209
(87) Numéro de publication internationale: WO 2020/128367

(56) Documents cités:
- EP-A1- 0 235 087
- EP-A1- 2 037 082
- WO-A1-2016/030613
- FR-A1- 2 964 426

## Description

### Domaine Technique

La présente invention se rapporte au domaine général des turbomachines, et plus particulièrement des turbomachines pour aéronef.

### Technique antérieure

Il est connu d'utiliser des pièces de turbomachine qui sont en matériau composite à renfort fibreux à tissage tridimensionnel, notamment pour les aubes de soufflante. Cependant, durant le fonctionnement de la turbomachine, les pièces de ladite turbomachine peuvent être soumises à des vibrations. Ces vibrations peuvent exciter les pièces selon un mode propre desdites pièces. Or, une pièce excitée selon un de ses modes propres risque de s'endommager et d'endommager les éléments voisins.

Ainsi, afin d'éviter qu'une pièce ne soit excitée selon un de ses modes propres, il est connu d'adapter la forme de ladite pièce. Par exemple, les aubes de soufflante possèdent une forme qui est adaptée afin de minimiser l'excitation desdites aubes de la soufflante selon leurs modes propres.

Cependant, une forme optimisée de la pièce, c'est-à-dire une forme permettant d'améliorer les performances de la pièce, peut être une forme pour laquelle un mode propre de la pièce est excité lors du fonctionnement de ladite pièce. Ainsi la solution actuelle ne permet pas de donner à la pièce sa forme optimisée. Par exemple, les performances aérodynamiques des aubes de la soufflante sont dégradées afin de donner auxdites aubes de la soufflante une forme limitant l'excitation des modes propres desdites aubes.

Le document FR 2 964 426 divulgue une pièce de turbomachine en matériau composite comprenant un renfort fibreux présentant un tissage tridimensionnel qui comprend un premier ensemble de fils en un premier matériau caractérisé en ce que le renfort fibreux comprend un élément d'amortissement des vibrations comprenant un deuxième matériau qui est viscoélastique et qui est différent du premier matériau, l'élément d'amortissement des vibrations étant intégré avec le premier ensemble de fils.

### Exposé de l'invention

La présente invention a donc pour but principal de pallier de tels inconvénients en proposant une pièce de turbomachine qui possède un mécanisme interne d'amortissement des vibrations subies par ladite pièce. Ainsi, il est possible de donner à la pièce une forme plus optimisée, notamment pour les performances aérodynamiques, sans augmenter le risque que ladite pièce rentre en résonnance.

Selon un premier aspect, l'invention propose une pièce de turbomachine en matériau composite comprenant un renfort fibreux présentant un tissage tridimensionnel qui comprend un premier ensemble de fils en un premier matériau, caractérisé en ce que le renfort fibreux comprend un élément d'amortissement des vibrations formé par un deuxième ensemble de fils comprenant un deuxième matériau qui est viscoélastique et qui est différent du premier matériau, le deuxième ensemble de fils étant tissé avec le premier ensemble de fils.

La pièce de turbomachine peut également comprendre les caractéristiques suivantes, qui peuvent être prises seules ou bien en combinaison suivant les possibilités techniques :
- le deuxième matériau est un matériau viscoélastique présentant un facteur de perte en cisaillement supérieur ou égal à 0,2 sur une plage de température comprise entre
- 50°C et 120°C, le facteur de perte en cisaillementétant déterminé en imposant une sollicitation en cisaillement sinusoïdale de fréquence égale à 100 Hz ;
- le premier ensemble de fils est tissé selon un premier motif de tissage qui est tridimensionnel, le deuxième ensemble de fils étant tissé selon un deuxième motif de tissage qui est différent du premier motif de tissage ;
- le premier ensemble de fils possède un premier angle d'embuvage et le deuxième ensemble de fils possède deuxième un angle d'embuvage, le premier angle d'embuvage étant différent du deuxième angle d'embuvage ;
- le deuxième angle d'embuvage est supérieur au premier angle d'embuvage ;
- le renfort fibreux comprend au moins une première portion constituée du premier ensemble de fils, et au moins une deuxième portion sur laquelle des fils de chaîne et/ou des fils de trame du renfort fibreux sont formés par des fils du deuxième ensemble de fils ;
- le deuxième matériau est un élastomère ;
- le deuxième ensemble de fils comprend des fils constitués du deuxième matériau ;
- le deuxième ensemble de fils comprend des fils possédant un revêtement en deuxième matériau ;
- le deuxième ensemble de fils comprend des fils formés par des fibres en deuxième matériau et des fibres en un autre matériau ;
- la pièce est une aube ;
- l'aube est une aube de soufflante ;
- le motif de tissage du renfort fibreux est choisi parmi une des armures suivantes : interlock, multi-toile, multi-satin et multi-sergé ;
- le premier matériau du premier ensemble de fils est choisi parmi les matériaux suivants : fils de carbone, fils de verre, fils d'aramide ;
- la pièce comprend un troisième ensemble de fils en un troisième matériau, ledit troisième ensemble de fils formant des couches entourant le premier ensemble de fils et le deuxième ensemble de fils.

Selon un deuxième aspect, l'invention propose une turbomachine comprenant une pièce selon l'une quelconque des caractéristiques précédentes.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif.
[Fig. 1] La figure 1 représente une vue schématique d'une turbomachine.
[Fig. 2] La figure 2 représente une vue d'une section d'une pièce selon une variante de l'invention réalisée par rayons X.
[Fig. 3] La figure 3 représente une vue détaillée de la figure 2 des angles d'embuvage du premier ensemble de fils et du deuxième ensemble de fils.
[Fig. 4] La figure 4 illustre un plan d'une armure de tissage tridimensionnel interlock.
[Fig. 5] La figure 5 illustre un plan d'une armure de tissage tridimensionnel multi-toile.
[Fig. 6] La figure 6 illustre un plan d'une armure de tissage tridimensionnel multi-satin.
[Fig. 7] La figure 7 illustre un plan d'une armure de tissage tridimensionnel multi-sergé.

### Description des modes de réalisation

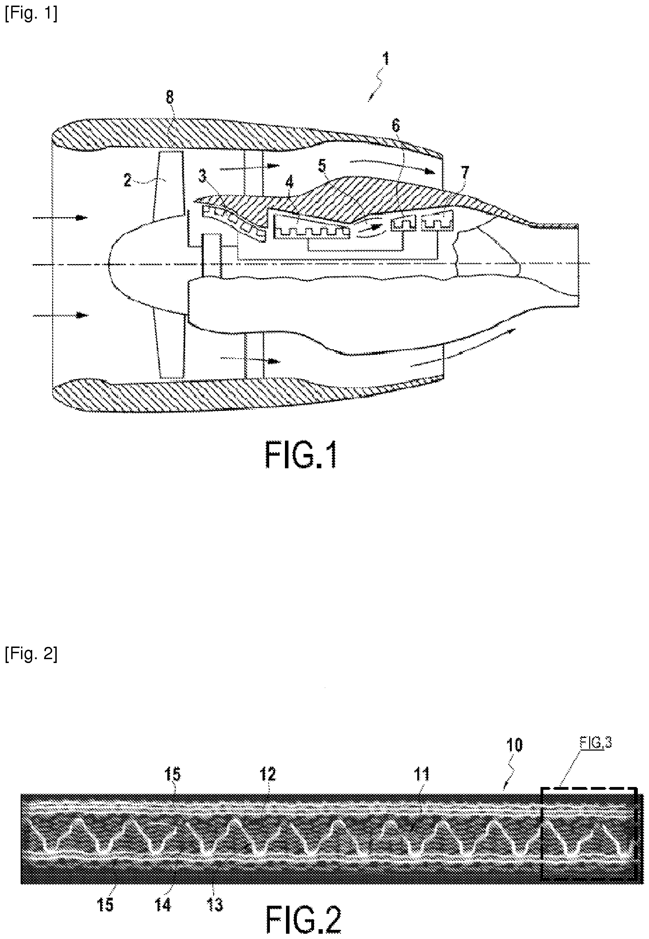

Comme illustrée sur la figure 1, selon le sens de circulation du flux d'air, une turbomachine 1 comprend une soufflante 2, un compresseur basse pression 3, un compresseur haute pression 4, une chambre de combustion 5, une turbine haute pression 6, et une turbine basse pression 7.

De plus, la turbomachine 1 comprend différents carters, comme par exemple un carter de soufflante 8 qui entoure la soufflante 2, qui entourent différents éléments de ladite turbomachine 1.

En outre, la turbomachine 1 peut être une turbomachine à réducteur, permettant ainsi de découpler la soufflante 2 et la turbine basse pression 7, ou bien la soufflante 2 peut être directement couplé à l'arbre basse pression qui est entrainé en rotation par la turbine basse pression 7.

L'invention peut s'appliquer pour différentes pièces de la turbomachine 1 qui sont soumises à des vibrations et qui ainsi sont susceptibles de rentrer en résonnance, et notamment pour des aubes de ladite turbomachine. En effet, les aubes de la turbomachine sont des éléments qui sont particulièrement soumis à des vibrations.

En particulier, l'invention s'applique pour des aubes de la soufflante 2, qui sont particulièrement soumises à des vibrations, par exemple lorsque la soufflante 2 est soumise à un vent de travers.

Comme visible sur la figure 2, une pièce 10 selon l'invention est une pièce en matériau composite qui comprend un renfort fibreux 11 densifié par une matrice. La matrice peut par exemple être une matrice polymère, notamment une matrice époxy, ou bien une matrice en carbone. Le renfort fibreux 11 présente un tissage qui est tridimensionnel.

La figure 2 est une vue par rayon X (vue µCT) d'une section de la pièce 10 de la turbomachine 1. La différence de couleur entre les fils indique une différence de densité entre les matériaux composant les différents fils.

Le renfort fibreux 11 comprend un premier ensemble de fils 12. Le premier ensemble de fils 12 est tissé selon un premier motif de tissage qui est tridimensionnel. Le premier ensemble de fils 12 a pour fonction d'apporter au renfort fibreux ses caractéristiques de tenues mécaniques.

Par "tissage tridimensionnel" ou "tissage 3D", on entend ici un mode de tissage par lequel certains au moins des fils de chaîne lient des fils de trame sur plusieurs couches de trame.

La réalisation de la structure fibreuse par tissage 3D permet d'obtenir une liaison entre les couches, donc d'avoir une bonne tenue mécanique de la structure fibreuse et de la pièce en matériau composite obtenue, en une seule opération textile.

Le motif de tissage tridimensionnel du renfort fibreux 11 peut être choisi parmi une des armures suivantes : interlock, multi-toile, multi-satin et multi-sergé. Ainsi, le premier motif de tissage peut être choisi parmi une des armures suivantes : interlock, multi-toile, multi-satin et multi-sergé.

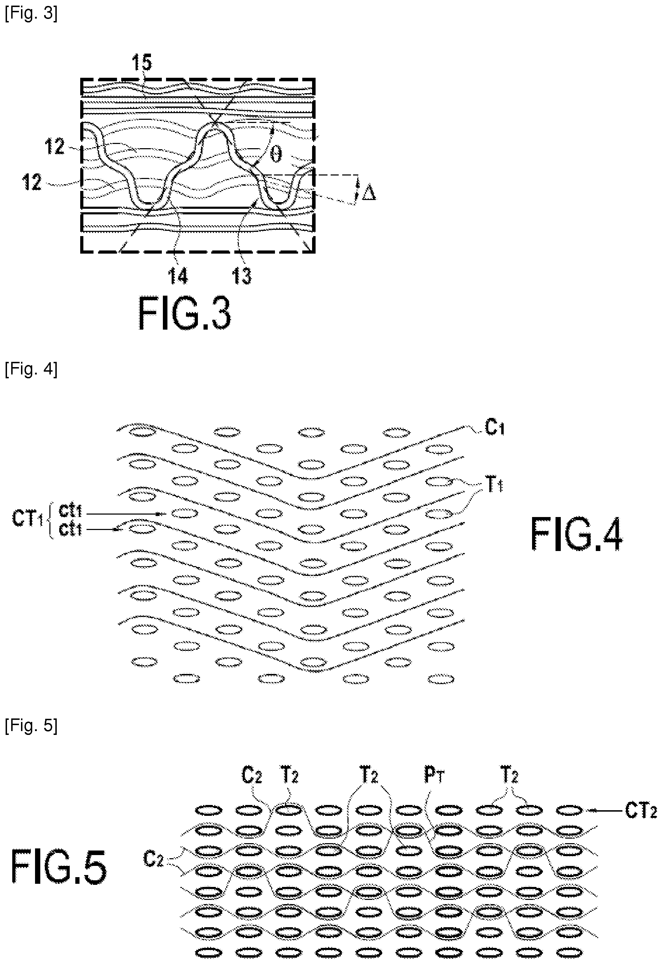

Par « armure ou tissu interlock », on entend ici une armure de tissage 3D dont chaque couche de fils de chaîne lie plusieurs couches de fils de trame avec tous les fils de la même colonne de chaîne ayant le même mouvement dans le plan de l'armure. La figure 4 est une vue de 8 plans d'une armure interlock à 7 couches de fils de chaîne C1 et 8 couches CT1 de fils de trame T1. Dans l'armure interlock illustrée, une couche CT1 de fils de trame T1 est formée de deux demi-couches ct1 adjacentes décalées l'une par rapport à l'autre dans le sens chaîne. On a donc 16 demi-couches de fils de trame positionnées en quinconce. Chaque fil de chaîne C1 lie 3 demi-couches de fils de trame. On pourrait aussi adopter une disposition en trame non en quinconce, les fils de trame de deux couches de fils de trame voisines étant alignés sur des mêmes colonnes.

Par « armure ou tissu multi-toile », on désigne ici un tissage 3D avec plusieurs couches de fils de trame dont l'armure de base de chaque couche est équivalente à une armure de type toile classique mais avec certains points de l'armure qui lient les couches de fils de trame entre elles. La figure 5 montre un plan de tissu multi-toile dans lequel des fils de chaîne C2 sont de temps en temps déviés de leur trajet de toile 2D classique associé à une couche CT2 de fils de trame pour saisir un fil de trame T2d'une couche voisine et former des points de toile particuliers PT liant deux couches de fils de trame voisines. Au niveau d'un point de toile particulier PT, le fil de chaîne C2 passe autour de deux fils de trame T2 situés sur une même colonne dans deux couches CT2 de trame voisines.

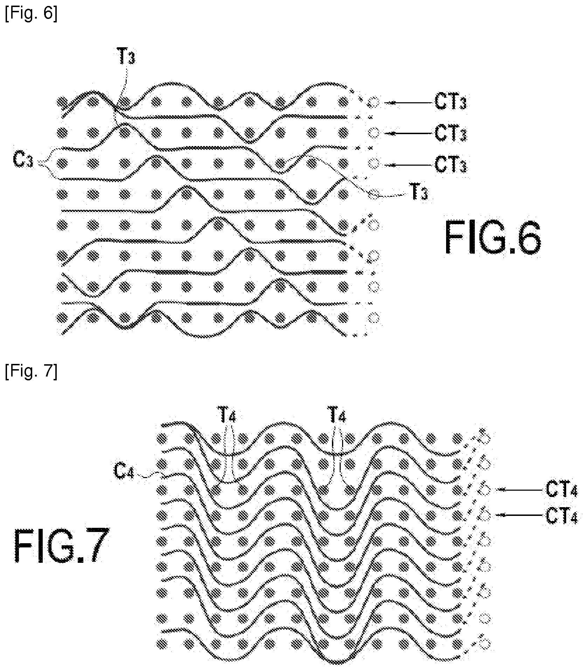

Par « armure ou tissu multi-satin », on désigne ici un tissage 3D avec plusieurs couches de fils de trame dont l'armure de base de chaque couche est équivalente à une armure de type satin classique mais avec certains points de l'armure qui lient les couches de fils de trame entre elles. La figure 6 montre un plan d'un tissu multi-satin, dans lequel chaque fil de chaîne C3, à l'exception des fils de chaîne situés en surface de texture, est dévié alternativement dans un sens et dans l'autre de manière à saisir un fil de trame T3 sur n d'une première couche CT3 de fils de trame et un fil de trame T3 sur n d'une deuxième couche CT3 de fils de trame adjacente à la première, n étant un nombre entier supérieur à 2 réalisant ainsi une liaison entre deux couches.

Par « armure ou tissu multi-sergé », on désigne ici un tissage 3D avec plusieurs couches de fils de trame dont l'armure de base de chaque couche est équivalente à une armure de type sergé classique mais avec certains points de l'armure qui lient les couches de fils de trame entre elles. La figure 7 montre un plan d'un tissu multi-sergé, dans lequel chaque fil de chaîne C4, à l'exception des fils de chaîne situés en surface de texture, est dévié de manière à saisir par 2 des fils de trame T4 d'une couche CT4 de fils de trame ou de plusieurs couches voisines CT4 de fils trame.

Afin d'amortir les vibrations, le renfort fibreux 11 de la pièce 10 comprend également un élément d'amortissement des vibrations 13 qui est formé par un deuxième ensemble de fils 14 qui est tissé au premier ensemble de fils 12. Le deuxième ensemble de fils 14 comprend un second matériau qui est différent du premier matériau, ledit deuxième matériau étant un matériau viscoélastique. Le fait que le deuxième ensemble de fils 14 soit tissé avec le premier ensemble de fils 12 permet d'éviter que l'élément d'amortissement 13 se désolidarise du reste de la pièce 10.

Le fait que le deuxième ensemble de fils 14 comprend un matériau viscoélastique permet d'amortir les vibrations de la pièce 10, grâce à l'absorption d'une partie de l'énergie par la déformation du matériau viscoélastique, notamment lorsque le matériau viscoélastique est sollicité en cisaillement.

La localisation de l'élément d'amortissement des vibrations 13 dans la pièce 10 permet de sélectionner les modes propres pour lesquels ledit élément d'amortissement des vibrations 13 amortie les déformations. L'élément d'amortissement des vibrations 13 peut par exemple être situé sur une zone de la pièce 10 qui est le plus déformée dans un mode propre de ladite pièce 10.

Ainsi, il est possible de choisir des formes pour la pièce 10 pour lesquelles ladite pièce 10 possède des modes propres qui sont susceptibles d'être excités lors du fonctionnement de la turbomachine 1 mais pour lesquelles ladite pièce 10 possède de meilleures performances (notamment des performances aérodynamiques), l'élément d'amortissement des vibrations 13 étant adapté pour amortir ces modes propres.

Le deuxième matériau peut présenter un facteur de perte en cisaillement supérieur ou égal à 0,2 sur la plage de température comprise entre -50°C et 120°C, le facteur de perte en cisaillement étant déterminé en imposant une sollicitation en cisaillement sinusoïdale de fréquence égale à 100 Hz. Le facteur de perte en cisaillement d'un matériau est, de manière connue en soi, le rapport entre la partie imaginaire de son module de cisaillement complexe et la partie réelle de son module de cisaillement complexe. Le facteur de perte en cisaillement correspond à la tangente du déphasage de la déformation subie par le deuxième matériau par rapport à la sollicitation en cisaillement, ce facteur quantifiant la quantité d'énergie absorbée par ledit deuxième matériau lors de sa déformation sous cette sollicitation. Une telle caractéristique permet avantageusement de dissiper davantage encore l'énergie vibratoire.

Le facteur de perte en cisaillement du deuxième matériau peut en particulier être supérieur ou égal à 0,4.

Le deuxième matériau peut être un élastomère. Le deuxième matériau peut par exemple être du caoutchouc naturel (NR), du caoutchouc synthétique (IR), du polybutadiène (BR), du styrène-butadiène (SBR), du butadiène-acrylonitrile (NBR), de l'ethylène-propylène-diène (EPDM), du polyuréthane (PU/EU), du polychloroprène (CR), de l'isobutylène-isoprène (IIR), du silicone (polysiloxane) (SI), du fluoroélastomère (FKM/FPM), du perfluoroélastomère (FFKM), du fluorosilicone, du polyéthylène chlorosulfoné (CSM), du epichlorhydrine (CO/ECO), du caoutchouc nitrile (NBR), du caoutchouc nitrile à terminaison époxy (ETBN), du polybutadiène carboxylé (CTBN), ou encore du caoutchouc nitrile à terminaison amine (ATBN). Le deuxième matériau peut être un thermoplastique, ou bien le deuxième matériau peut être un thermodurcissable. Le deuxième matériau peut également être par exemple en acrylonitrile butadiène styrène (ABS), en polyamide (PA), en polyétheréthercétone (PEEK), ou en polyétherimide (PEI).

Le premier matériau peut par exemple être choisi parmi les matériaux suivants : fils de carbone, fils de verre, fils d'aramide (notamment le Kevlar).

L'élément d'amortissement des vibrations 13 peut être intégré à la pièce 10 selon plusieurs variantes possibles.

Selon une première variante, l'élément d'amortissement des vibrations 13 est intégré dans la pièce 10 en réalisant le renfort fibreux 11 de sorte à ce qu'il comprenne le premier ensemble de fils 12 tissé selon un premier motif de tissage qui est tridimensionnel, et le deuxième ensemble de fils 14 qui est tissé selon un deuxième motif de tissage qui est différent du premier motif de tissage.

Le fait que le deuxième ensemble de fils 14 d'une part possède un deuxième motif de tissage différent du premier motif de tissage du premier ensemble de fils 12, et que d'autre part ledit deuxième ensemble de fils 14 comprend le deuxième matériau qui est un matériau viscoélastique, permet de renforcer le fait que deuxième ensemble de fils 14 subit une contrainte en cisaillement lorsque la pièce se déforme selon un mode propre d'amortir les vibrations de ladite pièce 10.

Cette première variante présente l'avantage que l'intégration de l'élément d'amortissement des vibrations 13 ne modifie pas le premier ensemble de fils 12, simplifiant ainsi la fabrication de la pièce 10. En effet, le deuxième ensemble de fils 14 est disposé dans les porosités formées par le premier ensemble de fils 12 qui forme les fils de chaîne et de trame de l'armure du renfort fibreux 11, prenant ainsi uniquement la place d'une portion de la matrice de la pièce 10.

Comme visible sur la figure 3, le premier ensemble de fils 12 possède un premier angle d'embuvage Δ, et le deuxième ensemble de fils 14 possède un deuxième angle d'embuvage θ.

Afin d'augmenter la différence de déformation entre le premier ensemble de fils 12 et le deuxième ensemble de fils 14, et ainsi augmenter la contrainte de cisaillement sur ledit deuxième ensemble de fils 14, le premier angle d'embuvage Δ et le deuxième angle d'embuvage θ sont différents.

L'embuvage correspond à la différence entre la longueur d'un fil lorsque ledit fil est tissé et la longueur lorsque ledit fil est tendu. Ainsi, plus l'angle d'embuvage est élevé, plus le fil suit une trajectoire sinueuse lorsque ledit fil est tissé, et plus l'angle d'embuvage est faible, plus le fil suit une trajectoire tendue lorsque ledit fil est tissé.

La différence d'angle d'embuvage entre le premier ensemble de fils 12 et le deuxième ensemble de fils 14 peut être réalisée par une différence de nombre de couches de fils de chaine ou de trame traversées.

De préférence, le deuxième angle d'embuvage θ est supérieur au premier angle d'embuvage Δ, permettant ainsi d'augmenter d'avantage les contraintes de cisaillement appliquées sur le deuxième ensemble de fils 14 lorsque la pièce 10 se déforme selon un mode propre.

Selon une deuxième variante possible, l'élément d'amortissement des vibrations 13 est intégré dans la pièce 10, non pas en rajoutant les fils du deuxième ensemble de fils 14 entre les fils de chaîne et de trame de l'armure du renfort fibreux 11 formés par le premier ensemble de fils 12 comme cela est le cas dans la première variante, mais en substituant localement des fils de chaîne et/ou de trame de l'armure du renfort fibreux 11 par des fils du deuxième ensemble de fils 14, ou bien en ajoutant localement des fils de chaîne et/ou de trame de l'armure du renfort fibreux 11 avec des fils du deuxième ensemble de fils 14.

Ainsi, selon la deuxième variante, le renfort fibreux 11 comprend au moins une première portion qui est constituée des fils du premier ensemble de fils 12, et au moins une deuxième portion sur laquelle des fils de chaîne et/ou des fils de trame du renfort fibreux 11 sont formés par des fils du deuxième ensemble de fils 14. Le nombre et la position des premières portions et des deuxièmes portions du renfort fibreux 11 sont adaptées suivant les modes propres que l'on cherche à amortir.

Sur la première portion, le renfort fibreux 11 est dénué du deuxième ensemble de fils 14, les fils de chaîne et de trame sont uniquement formés par les fils du premier ensemble de fils 12 qui sont dans le premier matériau. Sur la deuxième portion, au moins une partie (et jusqu'à la totalité) des fils de chaîne et/ou des fils de trame de l'armure du renfort fibreux 11 sont formés par des fils du deuxième ensemble de fils 14, c'est-à-dire des fils qui comprennent le deuxième matériau.

Ainsi, dans la deuxième variante, le premier ensemble de fils 12 et le deuxième ensemble de fils 14 sont tissés selon le même motif de tissage tridimensionnel, ce motif étant l'armure du renfort fibreux 11.

Selon un mode de réalisation possible, les fils du deuxième ensemble de fils 14 sont constitués par le deuxième matériau. Ainsi, selon un mode de réalisation possible, le deuxième ensemble de fils 14 peut être constitués de fils d'élastomère.

Selon un autre mode de réalisation possible, les fils du deuxième ensemble de fils 14 peuvent comprendre un revêtement en deuxième matériau. Dans cette variante, les fils du deuxième ensemble de fils 14 comprennent un coeur en un troisième matériau qui est entouré par le revêtement en deuxième matériau, ledit troisième matériau étant différent du deuxième matériau. Le troisième matériau peut être identique au premier matériau. Le troisième matériau peut par exemple être en carbone. Ainsi, selon un mode de réalisation possible, le deuxième ensemble de fils 14 peut comprendre des fils comprenant un coeur en carbone entouré par un revêtement en élastomère.

Selon encore un autre mode de réalisation possible, les fils du deuxième ensemble de fils 14 peuvent comprendre des fibres en deuxième matériau. Les fils du deuxième ensemble de fils 14 peuvent ainsi être des fils hybrides formés par tissage de fibres en deuxième matériau et de fibres en quatrième matériau, ledit quatrième matériau étant différent du deuxième matériau. Le quatrième matériau peut être identique au premier matériau. Le quatrième matériau peut par exemple être en carbone. Ainsi, selon un mode de réalisation possible, le deuxième ensemble de fils 14 peut comprendre des fils formés par tissage de fibres de carbone et de fibres d'élastomère.

La pièce 10 peut typiquement être une aube d'un rotor de la turbomachine 1, et notamment une aube de la soufflante 2 de la turbomachine 1. La pièce 10 peut également être un carter de la turbomachine 1, par exemple un carter de la soufflante 2.

De plus, comme illustré sur la figure 2, la pièce 10 peut également comprendre un troisième ensemble de fils 15 composés d'un troisième matériau, qui peut être différent du premier matériau et du deuxième matériau, ou bien qui peut être identique au premier matériau. Le troisième ensemble de fils 15 forme une couche sur les parois externes de la pièce 10, ledit troisième ensemble de fils 15 entourant ainsi le premier ensemble de fils 12 et le deuxième ensemble de fils 14.

Dans le cas d'une aube, le troisième ensemble fils 15 peut par exemple former une couche sur l'extrados et une couche sur l'intrados de ladite aube. Dans le cas d'un carter, le troisième ensemble de fils 15 peut par exemple former une couche sur une face externe et une couche sur une face interne dudit carter par rapport à l'axe de la turbomachine 1.

Le troisième ensemble de fils 15 peut être tissé selon un tissage bidimensionnel, ou bien être formé par empilement de plis unidirectionnels.

Par "tissage bidimensionnel" ou "tissage 2D", on entend ici un mode de tissage classique par lequel chaque fil de chaîne passe d'un côté à l'autre de fils d'une seule couche de trame.

Par « plis unidirectionnel » ou « plis UD », on entend ici des nappes de fils non tissés formées par un ensemble de fils qui s'étendent tous dans une même direction.

Le troisième matériau du troisième ensemble de fils 15 peut par exemple être en fils de carbone, en fils de verre, ou encore par exemple en fils d'aramide (et notamment en Kevlar).

## Revendications

1. Pièce (10) de turbomachine (1) en matériau composite comprenant un renfort fibreux (11) présentant un tissage tridimensionnel qui comprend un premier ensemble de fils (12) en un premier matériau, **caractérisé en ce que** le renfort fibreux (11) comprend un élément d'amortissement des vibrations (13) formé par un deuxième ensemble de fils (14) comprenant un deuxième matériau qui est viscoélastique et qui est différent du premier matériau, le deuxième ensemble de fils (14) étant tissé avec le premier ensemble de fils (12).

2. Pièce (10) selon la revendication 1, dans laquelle le deuxième matériau est un matériau viscoélastique présentant un facteur de perte en cisaillement supérieur ou égal à 0,2 sur une plage de température comprise entre -50°C et 120°C, le facteur de perte en cisaillement étant déterminé en imposant une sollicitation en cisaillement sinusoïdale de fréquence égale à 100 Hz.

3. Pièce (10) selon l'une quelconque des revendications 1 ou 2, dans laquelle le premier ensemble de fils (12) est tissé selon un premier motif de tissage qui est tridimensionnel, le deuxième ensemble de fils (14) étant tissé selon un deuxième motif de tissage qui est différent du premier motif de tissage.

4. Pièce (10) selon la revendication 3, dans laquelle le premier ensemble de fils (12) possède un premier angle d'embuvage (Δ) et le deuxième ensemble de fils (14) possède deuxième un angle d'embuvage (θ), le premier angle d'embuvage (Δ) étant différent du deuxième angle d'embuvage (θ).

5. Pièce (10) selon la revendication 4, dans laquelle le deuxième angle d'embuvage (θ) est supérieur au premier angle d'embuvage (Δ).

6. Pièce (10) selon l'une quelconque des revendications 1 ou 2, dans laquelle le renfort fibreux (11) comprend au moins une première portion constituée du premier ensemble de fils (12), et au moins une deuxième portion sur laquelle des fils de chaîne et/ou des fils de trame du renfort fibreux (11) sont formés par des fils du deuxième ensemble de fils (14).

7. Pièce (10) selon l'une quelconque des revendications 1 à 6, dans laquelle le deuxième matériau est un élastomère.

8. Pièce (10) selon l'une quelconque des revendications 1 à 7, dans laquelle le deuxième ensemble de fils (14) comprend des fils constitués du deuxième matériau.

9. Pièce (10) selon l'une quelconque des revendications 1 à 7, dans laquelle le deuxième ensemble de fils (14) comprend des fils possédant un revêtement en deuxième matériau.

10. Pièce (10) selon l'une quelconque des revendications 1 à 7, dans laquelle le deuxième ensemble de fils (14) comprend des fils formés par des fibres en deuxième matériau et des fibres en un autre matériau.

11. Pièce (10) selon l'une quelconque des revendications 1 à 10, dans laquelle la pièce (10) est une aube.

12. Pièce (10) selon la revendication 11, dans laquelle l'aube est une aube de soufflante (2).

13. Pièce (10) selon l'une quelconque des revendications 1 à 12, dans laquelle le motif de tissage du renfort fibreux (11) est choisi parmi une des armures suivantes : interlock, multi-toile, multi-satin et multi-sergé.

14. Pièce (10) selon l'une quelconque des revendications 1 à 13, dans laquelle le premier matériau du premier ensemble de fils (12) est choisi parmi les matériaux suivants : fils de carbone, fils de verre, fils d'aramide.

15. Pièce (10) selon l'une quelconque des revendications 1 à 14, dans laquelle ladite pièce (10) comprend un troisième ensemble de fils (15) en un troisième matériau, ledit troisième ensemble de fils (15) formant des couches entourant le premier ensemble de fils (12) et le deuxième ensemble de fils (14).

16. Turbomachine (1) comprenant une pièce (10) selon l'une quelconque des revendications 1 à 15.

## Patentansprüche

1. Teil (10) einer Turbomaschine (1) aus Verbundmaterial, das eine Faserverstärkung (11) umfasst, die eine dreidimensionale Webung aufweist, die eine erste Fadenanordnung (12) aus einem ersten Material umfasst, **dadurch gekennzeichnet, dass** die Faserverstärkung (11) ein Vibrationsdämpfungselement (13) umfasst, das von einer zweiten Fadenanordnung (14) gebildet ist, die ein zweites Material umfasst, das viskoelastisch ist und das vom ersten Material unterschiedlich ist, wobei die zweite Fadenanordnung (14) mit der ersten Fadenanordnung (12) gewebt ist.

2. Teil (10) nach Anspruch 1, wobei das zweite Material ein viskoelastisches Material ist, das einen Scherverlustfaktor von über oder gleich 0,2 in einem Temperaturbereich aufweist, der zwischen -50°C und 120°C liegt, wobei der Scherverlustfaktor durch Anwendung einer Sinusscherbeanspruchung mit einer Frequenz von gleich 100 Hz bestimmt wird.

3. Teil (10) nach einem der Ansprüche 1 oder 2, wobei die erste Fadenanordnung (12) gemäß einem ersten Webmotiv gewebt ist, das dreidimensional ist, wobei die zweite Fadenanordnung (14) gemäß einem zweiten Webmotiv gewebt ist, das vom ersten Webmotiv unterschiedlich ist.

4. Teil (10) nach Anspruch 3, wobei die erste Fadenanordnung (12) einen ersten Crimpwinkel (Δ) besitzt und die zweite Fadenanordnung (14) einen zweiten Crimpwinkel (θ) besitzt, wobei der erste Crimpwinkel (Δ) vom zweiten Crimpwinkel (θ) unterschiedlich ist.

5. Teil (10) nach Anspruch 4, wobei der zweite Crimpwinkel (θ) größer als der erste Crimpwinkel (Δ) ist.

6. Teil (10) nach einem der Ansprüche 1 oder 2, wobei die Faserverstärkung (11) mindestens einen ersten Abschnitt, der von der ersten Fadenanordnung (12) gebildet ist, und mindestens einen zweiten Abschnitt umfasst, auf dem Kettfäden und/oder Schussfäden der Faserverstärkung (11) von den Fäden der zweiten Fadenanordnung (14) gebildet sind.

7. Teil (10) nach einem der Ansprüche 1 bis 6, wobei das zweite Material ein Elastomer ist.

8. Teil (10) nach einem der Ansprüche 1 bis 7, wobei die zweite Fadenanordnung (14) Fäden umfasst, die aus dem zweiten Material gebildet sind.

9. Teil (10) nach einem der Ansprüche 1 bis 7, wobei die zweite Fadenanordnung (14) Fäden umfasst, die eine Beschichtung aus zweitem Material besitzen.

10. Teil (10) nach einem der Ansprüche 1 bis 7, wobei die zweite Fadenanordnung (14) Fäden umfasst, die von Fasern aus zweitem Material und Fasern aus einem anderen Material gebildet sind.

11. Teil (10) nach einem der Ansprüche 1 bis 10, wobei das Teil (10) eine Schaufel ist.

12. Teil (10) nach Anspruch 11, wobei die Schaufel eine Gebläseschaufel (2) ist.

13. Teil (10) nach einem der Ansprüche 1 bis 12, wobei das Webmotiv der Faserverstärkung (11) aus einer der folgenden Armierungen Interlock, Multi-Tuch, Multi-Satin und Multi-Köper ausgewählt ist.

14. Teil (10) nach einem der Ansprüche 1 bis 13, wobei das erste Material der ersten Fadenanordnung (12) aus den folgenden Materialien Karbonfaden, Glasfaden, Aramidfaden ausgewählt ist.

15. Teil (10) nach einem der Ansprüche 1 bis 14, wobei das Teil (10) eine dritte Fadenanordnung (15) aus einem dritten Material umfasst, wobei die dritte Fadenanordnung (15) Schichten bildet, die die erste Fadenanordnung (12) und die zweite Fadenanordnung (14) umgibt.

16. Turbomaschine (1), die ein Teil (10) nach einem der Ansprüche 1 bis 15 umfasst.

## Claims

1. A part (10) for a turbomachine (1) made of composite material comprising a fiber reinforcement (11) having a three-dimensional weaving comprising a first set of yarns (12) made of a first material, **characterized in that** the fiber reinforcement (11) comprises a vibrationdamping element (13) formed by a second set of yarns (14) comprising a second material which is viscoelastic and which is different to the first material, the second set of yarns (14) being woven with the first set of yarns (12).

2. The part (10) as claimed in claim 1, wherein the second material is made of a viscoelastic material having a shear loss factor greater than or equal to 0.2 over a temperature range between -50°C and 120°C, the shear loss factor being determined by imposing a sinusoidal shear stress of a frequency equal to 100 Hz.

3. The part (10) as claimed in any of claims 1 or 2, wherein the first set of yarns (12) is woven in a first weaving pattern which is three-dimensional, the second set of yarns (14) being woven in a second weaving pattern which is different to the first weaving pattern.

4. The part (10) as claimed in claim 3, wherein the first set of yarns (12) has a first warp shrinkage angle (Δ) and the second set of yarns (14) has a second warp shrinkage angle (θ), the first warp shrinkage angle (Δ) being different to the second warp shrinkage angle (θ).

5. The part (10) as claimed in claim 4, wherein the second warp shrinkage angle (θ) is greater than the first warp shrinkage angle (Δ).

6. The part (10) as claimed in any of claims 1 or 2, wherein the fiber reinforcement (11) comprises at least a first portion composed of the first set of yarns (12), and at least a second portion on which warp yarns and/or weft yarns of the fiber reinforcement (11) are formed by yarns of the second set of yarns (14).

7. The part (10) as claimed in any of claims 1 to 6, wherein the second material is an elastomer.

8. The part (10) as claimed in any of claims 1 to 7, wherein the second set of yarns (14) comprises yarns composed of the second material.

9. The part (10) as claimed in any of claims 1 to 7, wherein the second set of yarns (14) comprises yarns having a coating made of the second material.

10. The part (10) as claimed in any of claims 1 to 7, wherein the second set of yarns (14) comprises yarns formed by fibers made of the second material and fibers made of another material.

11. The part (10) as claimed in any of claims 1 to 10, wherein the part (10) is a blade.

12. The part (10) as claimed in claim 11, wherein the blade is a fan blade (2).

13. The part (10) as claimed in any of claims 1 to 12, wherein the weaving pattern of the fiber reinforcement (11) is chosen from among one of the following weaves: interlock, multi-canvas, multi-satin and multi-twill.

14. The part (10) as claimed in any of claims 1 to 13, wherein the first material of the first set of yarns (12) is chosen from among the following materials: carbon yarns, glass yarns, aramid yarns.

15. The part (10) as claimed in any of claims 1 to 14, wherein said part (10) comprises a third set of yarns (15) made of a third material, said third set of yarns (15) forming layers surrounding the first set of yarns (12) and the second set of yarns (14).

16. A turbomachine (1) comprising a part (10) as claimed in any of claims 1 to 15.
